# EUROPÄISCHE PATENTANMELDUNG

(11) **EP 1 418 588 A1**
(43) Veröffentlichungstag der Anmeldung: **12.05.2004**
(21) Anmeldenummer: 03024820.7
(22) Anmeldetag: 31.10.2003
(51) Int. Cl.: G11B 33/04

(54) **Hülle, insbesondere zur Aufnahme von flachen Gegenständen**

(30) Priorität: 06.11.2002 DE 20217207 U
(71) Anmelder: Siegerländer Plastik GmbH, 57223 Kreuztal (DE)
(72) Erfinder: Weihe, Georg, 57482 Wenden (DE); Börm, Volker, 57078 Siegen (DE); Weihe, Volker, 57223 Kreuztal (DE)
(74) Vertreter: Valentin, Ekkehard

(57) **Zusammenfassung**

Bei einer Hülle (10, 30, 70), insbesondere zur Aufnahme von flachen Gegenständen, bestehend aus mindestens einem Außenteil (11, 39, 81) weist die Hülle (10, 30, 70) mindestens ein verschiebbares Innenteil (12, 32, 60, 62, 65, 72) auf.

## Beschreibung

Die Erfindung betrifft eine Hülle, insbesondere zur Aufnahme von flachen Gegenständen, bestehend aus mindestens einem Außenteil.

Aufnahmevorrichtungen der gattungsgemäßen Art sind als Hüllen, bestehend aus einer geschlossenen Vorderwand und einer in der Regel aus zwei im Abstand voneinander verlaufenden Teilwänden gebildeten Rückwand, zum Einlegen / Einschieben von Ausweisen, CD - ROM, Disketten, DVD, Visitenkarten, Scheckkarten, Namensschilder und ähnlichen Gegenständen bekannt.

Hüllen für die Aufnahme von Scheckkarten werden im Spritzgußverfahren einteilig hergestellt oder, zweigeteilt in ein vorderes und in ein hinteres Wandteil, separat hergestellt und anschließend zusammengefügt. Um die eingelegte / eingeschobene Scheckkarte herausnehmen zu können, besitzt das vordere Wandteil eine ovales Langloch durch welches die Scheckkarte sichtbar ist und wodurch die Scheckkarte an einer offenen Querseite herausgeschoben werden kann.

Eine andere Art von Hüllen wird zur Ablage oder zum Versand von CD - ROM oder DVD eingesetzt. Die Hülle besteht aus einem dickeren Material. Zur Gestaltung einer oder mehrerer Aufnahmefächer werden zwei Material-Folien an drei Seiten zusammengeschweißt. Durch die an der vierten Seite freibleibende Öffnung werden die Datenträger eingelegt bzw. herausgenommen. Die Aufnahmefächer sind so groß bemessen, dass eine Person mit der Hand in die Aufnahmefächer hineinfassen kann. Dabei ist es unvermeidlich, dass die beiden Folien auseinandergedrückt werden. Bedingt durch die aufgewendete Kraft und abhängig von den Materialeigenschaften sind nach mehrmaligem Benutzen mehr oder weniger große Aufweitungen / Ausbeulungen an den Aufnahmefächern festzustellen. Das kann zu einem unerwünschten Herausrutschen des Datenträgers aus dem Aufnahmefach führen.

Eine Herausnahme der z.B. CD - ROM wird außerdem dadurch erschwert, dass sich die Folien statisch aufladen können und dann aneinander haften. In solch einem Zustand läßt sich eine in einer solchen Hülle liegende CD - ROM oder dergleichen nur schwer entnehmen.

Nachteilig bei den bekannten Hüllen ist weiterhin, dass die eventuell auf den Karten oder Datenträgem vorhandenen Magnetstreifen bei jedem Einschieben und bei jedem Herausziehen über die dem Magnetstreifen anliegende Innenwand der Hülle bewegt werden. Durch solch einen Reibschluß besteht die Gefahr, dass der Magnetstreifen beschädigt wird ( verkratzen ) und die darauf befindlichen Daten, von z.B. einem Geldautomaten, nicht mehr gelesen werden können.

Ein weiterer Nachteil der bekannten Hüllen ist außerdem die Notwendigkeit, dass beide Wandteile aus miteinander verschweißbaren Materialien bestehen müssen.

Der Erfindung liegt daher die Aufgabe zugrunde, eine gattungsgemäße Hülle ohne die genannen Nachteile zu schaffen, die insbesondere den Schutz der in den Hüllen befindlichen Gegenstände und deren Handhabung verbessert.

Diese Aufgabe wird erfindungsgemäß dadurch gelöst, dass die Hülle mindestens ein verschiebbares Innenteil aufweist

Eine Hülle zur Aufnahme von flachen Gegenständen, z.B. eine Magnetkarte, besteht somit aus einem in dem Außenteil verschiebbaren Innenteil zum Herausrükken der Scheckkarte oder dergleichen in eine aus dem Außenteil bzw. der Hülle zumindest soweit vorkragende Lage, dass sie sich bequem fassen und dann einfach völlig aus der Hülle herausziehen läßt. Die Hülle hat nahezu Kartengrösse. Als Material für das Außenteil wird vorzugsweise Hartfolie verwendet. Diese kann gefärbt oder transparent sein. Das Innenteil besteht vorzugsweise aus Kunststoff, es können aber auch Materialien wie Holz, Pappe oder Aluminium eingesetzt werden.

Eine bevorzugte Ausführung der Erfindung sieht vor, dass das Innenteil an seiner oberen und / oder unteren Längskante einen Vorsprung aufweist und die Aussparung im Bereich eines Rückens einer Falzung des Außenteils vorgesehen ist. Bei einer alternativen Anbringung von zwei Vorsprüngen haben beide den gleichen Abstand von der rechten bzw. linken Stirnkante des Innenteils. Die Höhe eines Vorsprungs entspricht mindestens der Materialdicke des Außenteils, so dass der Vorsprung zur Begrenzung des Verschiebeweges des Innenteils auf jeden Fall einen Anschlag an den Endkanten der Aussparung findet.

Das Außenteil kann an zwei Kanten gefalzt und dort mit die Vorderwand des Außenteils bzw. der Hülle nur über eine begrenzte Länge nach hinten abgewinkelt überlappenden Teilwänden als folglich offene zweiteilige Rückwand ausgebildet werden. Die Herstellung eines solchen Außenteils erfolgt z.B. durch Warmverformung, Extrusion oder Spritzgießen. Im Bereich der Falzungen ist im Materialzuschnitt zumindest an einer Längsseite eine die Aussparung definierende Ausstanzung vorhanden, in welche der Vorsprung des Innenteils eingreift. Die Länge einer Aussparung in dem Außenteil wird so gewählt, dass der Vorsprung dem Innenteil eine Bewegung ermöglicht, bei der das Innenteil bis zu der durch die Aussparung definierten Länge aus dem Außenteil herausgeschoben / herausgezogen werden kann.

Bei einer Variante kann das Außenteil und damit die Hülle aus einem die Vorderund Rückseite des Innenteils vollständig bedeckenden Schlauchabschnitt hergestellt werden. Durch solch eine Ausführung mit durchgängig geschlossener Vorder- und Rückwand der Hülle bzw. des Außenteils können zwei flache Gegenstände in eine Hülle eingelegt werden, die sich auf beiden Seiten des Innenteils befinden und somit zum Schutz vor z.B. Verunreinigung vollflächig abgedeckt sind.

Das Innenteil besitzt in einer besonderen Ausführungsform eine Oberfläche, welche ein Verkratzen der Karte oder CD - ROM vermeidet. Hierzu wird z.B. ein Vlies auf das Innenteil aufgeklebt oder das Innenteil selber besteht aus einem entsprechenden Material.

Nach einer Ausgestaltung der Erfindung weist das Innenteil auf seiner Vor- und /oder Rückseite ein Positionierungsmittel auf. Dieses befindet sich auf der Oberfläche des Innenteils stets in dem vom Außenteil überdeckten Bereich und trägt zur Vermeidung einer Verschiebung, z.B. einer Scheckkarte oder einer DVD, bei.

In einer einfachen Ausführung besteht das Positionierungsmittel aus einem Anschlag, welcher in der Mitte einer Stirnkante des Innenteils angeordnet ist und durch einfaches Umkanten erzeugt werden kann. Alternativ kann ein separater Anschlag / Mitnehmer auf das Innenteil angebracht werden. Die Höhe des Anschlages sollte der Dicke des eingelegten Gegenstandes entsprechen. Durch Anordnung der Anschläge an zwei Eckpunkte einer schmalen Seite des Innenteils wird erreicht, dass die Länge der Hülle der Länge der z.B. Magnetkarte entspricht.

Bei der Positionierung einer DVD ist es vorteilhaft, mehrere der Anschläge bzw. Positionierugnsmittel auf einem Halbkreis anzuordnen. Der Halbkreis verläuft gemäß dem äußeren Durchmesser einer DVD. Die Anschläge werden z.B. durch Prägestempel in die Oberfläche des Innenteils eingebracht. Bei Aufnahme von zwei DVD können solche Anschläge abwechselnd auf der Vor- und der Rückseite des Innenteils vorgesehen werden.

Eine weitere Ausführungsform der Erfindung sieht vor, das Innenteil mit einem aus einer Stanzung herausschwenkbaren Befestigungslappen auszubilden. Der von der Stanzung, z.B. in Form eines Halbkreises, vorgegebene Lappen wird aus der Ebene des Innenteils herausgedrückt und bildet einen Spalt, in den eine DVD eingeschoben wird und somit gegen Herausfallen gesichert ist.

Die Form eines Vorsprunges besteht in einer einfachen Ausführung aus einem Rechteck. Bei Verwendung der Hülle als z.B. Ausweishülle kann der Vorsprung nach einer Ausgestaltung der Erfindung so ausgebildet werden, dass er gleichzeitig als Befestigungsmittel dient. Eine Befestigung kann direkt erfolgen, indem in dem Vorsprung ein Langloch so vorgesehen wird, dass sich ein Hemdenknopf hindurchführen läßt. Alternativ kann eine Befestigung indirekt erfolgen, indem ein Vorsprung zur Befestigung einer Klammer oder eines Bandes dient, über die bzw. das sich die Hülle dann sichtbar anbringen läßt.

Weitere Merkmale und Einzelheiten der Erfindung ergeben sich aus den Ansprüchen und der nachfolgenden Beschreibung von in sehr schematischen Zeichnungen dargestellten Ausführungsbeispielen der Erfindung. Es zeigen:
- Fig. 1: in perspektivischer Darstellung eine Kartenhülle mit eingeschobener Magnetkarte;
- Fig. 2: in einer Draufsicht eine Hülle mit eingelegter CD - ROM;
- Fig. 3: als Teilansicht eine Ausführung zur Positionierung einer CD - ROM in einer Hülle;
- Fig. 4: als Teilansicht eine andere Ausführung zur Positionierung einer CD - ROM in einer Hülle;
- Fig. 5: als Einzelteil eine Ausführung eines Vorsprungs eines Innenteils einer Hülle; und
- Fig. 6: eine andere Ausführung eines Vorsprungs eines Innenteils einer Hülle.

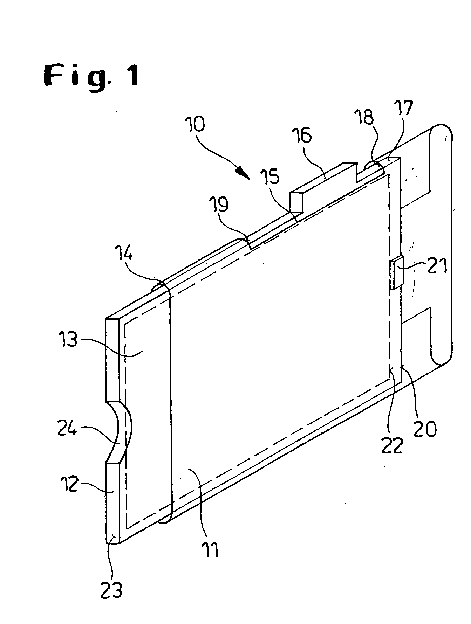

In Fig. 1 ist eine Hülle 10 dargestellt, welche aus einem eine Vorder- und eine Rückwand bzw. zwei Teil-Rückwände besitzenden Außenteil 11 und einem Innenteil 12 besteht. In diese Hülle 10 ist eine Magnetkarte 13 ( gestrichelt dargestellt ) eingelegt. Das Außenteil 11 wird durch Umfalten hergestellt und besitzt in einem oberen Falzbereich 14 im dortigen Abkantungsrücken eine längliche Aussparung 15. In diese Aussparung 15 greift ein Vorsprung 16 ein, welcher an einer Längskante 17 des Innenteils 12 angeordnet ist. Der Vorsprung 16 befindet sich bei völlig eingeschobenem Innenteil 12 an der rechten Anschlagkante 18 der Aussparung 15 und bei herausgeschobenem, die Magnetkarte 13 zum frei zugänglichen Ergreifen freigebendem Innenteil 12 an der linken Anschlagkante 19 der Aussparung 15. Durch den Vorsprung 16 wird ein komplettes Trennen von Innenteil 12 und Außenteil 11 verhindert, so dass das Innenteil stets in der Hülle bzw. dem Außenteil verbleibt. Zur richtigen Positionierung der Magnetkarte 13 besitzt das Innenteil 12 an der rechten Stirnkante 20 einen Anschlag 21. An diesem Anschlag 21 stützt sich die rechte Stirnkante 22 der Magnetkarte 13 ab.

Zur besseren Handhabung beim Einlegen und Herausnehmen der Magnetkarte 13 besitzt das Innenteil 12 an der im Ausführungsbeispiel linken Stimkante 23 eine Ausnehmung 24. Diese ermöglicht ein beidseitiges Greifen der Magnetkarte 13, nach dem begrenzten Herausschieben des Innenteils 12 aus dem Außenteil 11 bzw. der Hülle 10.

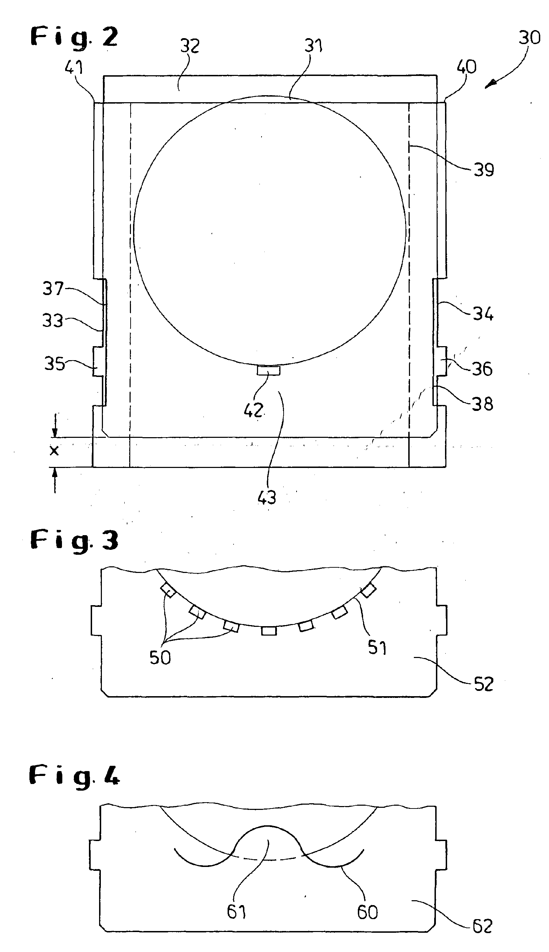

Ein Hülle 30 zur Aufnahme eines flachen Gegenstandes in Form einer CD - ROM oder DVD 31 wird in Fig. 2 dargestellt. An dem Innenteil 32 sind gemäß dem Ausführungsbeispiel an der rechten Kante 33 und an der linken Kante 34 Vorsprünge 35, 36 ausgebildet. Die Vorsprünge 35, 36 greifen in längliche Aussparungen 37, 38 des Außenteils 39 ein, welche sich in den Falzbereichen 40, 41 in den Rücken zum Übergang zu den hier gezeigten, im Gegensatz zur durchgängigen Vorderwand offenen, durch zwei im Abstand voneinander liegenden Teilwänden gebildeten Rückwand des Außenteils 39 befinden. Durch die Länge der Aussparungen 37, 38 kann die Länge x, mit der das Innenteil 32 gegenüber dem Außenteil 39 verschoben wird, festgelegt werden, was so natürlich auch für die Ausführung nach Fig. 1 gilt. Zur Positionierung der CD - ROM oder DVD 31 dient ein erhabener Anschlag 42, welcher aus der Oberfläche 43 des Innenteils 32 herausgeprägt ist.

In Fig. 3 ist eine Positionierung einer CD - ROM oder DVD 31 auf dem Innenteil 52 gezeigt, welche aus einer größeren Anzahl von Anschlägen 50 gebildet wird, wobei die Anschläge auf einem Halbkreis 51 angeordnet sind und somit die CD - ROM oder DVD 31 an deren Umfang an mehreren Stellen in Position halten.

Eine andere Positionierung ist in Fig. 4 dargestellt. Hier wird eine Stanzung 60 in Form eines Halbkreises, der einen Befestigungslappen 61 definiert, in das Innenteil 62 eingebracht. Durch Herausdrücken des Befestigungslappens 61 aus der Ebene des Innenteils 62 entsteht ein Spalt, in den die CD - ROM oder DVD 31 eingelegt und zwischen Befestigungslappen 61 und Innenteil 62 geklemmt bzw. gehalten wird.

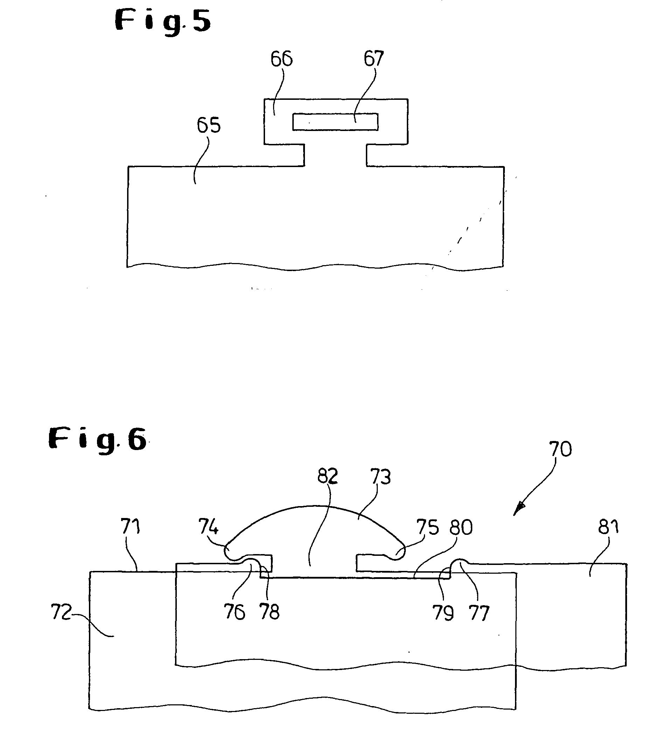

In Fig. 5 ist ein Innenteil 65 zu sehen, dessen Vorsprung 66 größer bemessen ausgebildet ist und damit die Möglichkeit bietet, ein Langloch 67 vorzusehen. Solch ein Vorsprung 66 wird berücksichtigt, wenn die komplette Hülle von einer Person sichtbar getragen wird. Hierbei wird in den Vorsprung 61 ein Langloch 62 eingebracht um ein Band ( nicht dargestellt) hindurchzufädeln oder eine Klammer / Klemme ( nicht dargestellt ) anzubringen.

Die Fig. 6 zeigt bei einer Hülle 70 an der Längskante 71 eines Innenteils 72 einen größer bemessenen Vorsprung 73, welcher pilzförmig ausgebildet ist Hierbei sind die Spitzen 74, 75 als Rastmittel vorgesehen. Die Spitze 75 gleitet hierzu bei einem eingeschobenen Innenteil 72 über die rechte Endkante 77 der Aussparung 80 des Außenteils 81. Bei herausgeschobenem Innenteil 72 gleitet die Spitze 74 über die linke Endkante 76 der Aussparung 80 des Außenteils 81. Durch die eine oder die andere Rastposition wird eine unkontrollierte Bewegung des Innenteils 72 in dem Außenteil 81 bzw. der Hülle vermieden.

## Patentansprüche

1. Hülle, (10, 30, 70) insbesondere zur Aufnahme von flachen Gegenständen, bestehend aus mindestens einem Außenteil (11, 39, 81),
**dadurch gekennzeichnet,**
**dass** die Hülle (10, 30, 70) mindestens ein verschiebbares Innenteil (12, 32, 60, 62, 65, 72) aufweist.

2. Hülle nach Anspruch 1,
**dadurch gekennzeichnet,**
**dass** sich das Innenteil (12, 32, 60, 62, 65, 72) relativ zum Außenteil (11, 39, 81 ) verschieben läßt, wobei das Innenteil ( 12, 32, 52, 62, 65, 72 ) mindestens einen Vorsprung ( 16, 21, 35, 36, 66, 73 ) aufweist, der in einer Aussparung ( 15, 25, 37, 38, 80 ) des Außenteils ( 11, 39, 81 ) geführt wird.

3. Hülle nach Anspruch 1 oder 2,
**dadurch gekennzeichnet,**
**dass** der Vorsprung ( 16, 35, 36, 66, 73 ) an einer Längskante ( 18, 33, 34 ) des Innenteils ( 12, 32, 52, 62, 65, 72 ) angeordnet ist und die Aussparung ( 15, 37, 38, 80 ) im Bereich eines Rückens einer Falzung ( 14, 40, 41 ) des Außenteils ( 11, 39, 81 ) vorgesehen ist.

4. Hülle nach einem der Ansprüche 1 bis 3,
**dadurch gekennzeichnet,**
**dass** das Innenteil ( 12, 32, 52, 62, 65, 72 ) ein Positionierungsmittel ( 21, 42 ) auf seiner Vor- und / oder Rückseite aufweist.

5. Hülle nach einem der Ansprüche 1 bis 4,
**dadurch gekennzeichnet,**
**dass** das Innenteil ( 12, 32, 52, 62, 65, 72 ) mit einem aus einer Stanzung ( 60 ) herausschwenkbaren Lappen ( 61 ) zur Positionierung des flachen Gegenstandes ( 13, 31 ) ausgebildet ist.

6. Hülle nach Anspruch 3,
**dadurch gekennzeichnet,**
**dass** der Vorsprung (16, 35, 36, 66, 73) neben der rechten oder der linken Endkante der Aussparung ( 15, 37, 38, 80 ) eine Rastposition einnimmt.

7. Hülle nach Anspruch 3,
**dadurch gekennzeichnet,**
**dass** der Vorsprung ( 16, 35, 36, 66, 73 ) mit einer Lochung (67) oder dergleichen zur direkten Befestigung der Hülle ( 10, 30, 70) versehen ist.

8. Hülle nach einem der Ansprüche 2 bis 6,
**dadurch gekennzeichnet,**
**dass** der Vorsprung (16, 35, 36, 66, 73 ) mit einer Lochung ( 67 ) zur Aufnahme eines Befestigungsmittels wie einer Klammer oder einem Band versehen ist.

9. Hülle nach einem der Ansprüche 1 bis 8,
**dadurch gekennzeichnet,**
**dass** das Innenteil ( 12, 32, 52, 62, 65, 72 ) eine den eingelegten Gegenstand ( 13, 31 ) schonende Oberfläche aufweist.
